# EUROPÄISCHE PATENTSCHRIFT

(11) **EP 3 741 094 B1**
(45) Veröffentlichungstag und Bekanntmachung des Hinweises auf die Patenterteilung: **03.07.2024**
(21) Anmeldenummer: 19700771.9
(22) Anmeldetag: 08.01.2019
(51) Int. Cl.: H04L 9/40, H04L 9/08

(54) **STEUERUNGSSYSTEM FÜR EIN KRAFTFAHRZEUG, VERFAHREN ZUM BETREIBEN DES STEUERUNGSSYSTEMS SOWIE KRAFTFAHRZEUG MIT EINEM DERARTIGEN STEUERUNGSSYSTEM**
CONTROL SYSTEM FOR A MOTOR VEHICLE, METHOD FOR OPERATING THE CONTROL SYSTEM AND MOTOR VEHICLE WITH SUCH A CONTROL SYSTEM
SYSTEME DE COMMANDE POUR VEHICULE AUTOMOBILE, PROCEDE DE FONCTIONNEMENT DU SYSTEME DE COMMANDE ET VEHICULE AUTOMOBILE COMPORTANT UN TEL SYSTEME DE COMMANDE

(30) Priorität: 18.01.2018 DE 102018200820
(43) Veröffentlichungstag der Anmeldung: 25.11.2020
(73) Patentinhaber: Volkswagen Aktiengesellschaft, 38440 Wolfsburg (DE)
(72) Erfinder: BLUMENTRITT, Marc, 38104 Braunschweig (DE)
(86) Internationale Anmeldenummer: PCT/EP2019/050346
(87) Internationale Veröffentlichungsnummer: WO 2019/141541

(56) Entgegenhaltungen:
- WO-A1-2017/042012
- WO-A1-2017/051170
- US-A1- 2005 135 625
- US-A1- 2013 346 751

## Beschreibung

Die Erfindung betrifft ein Steuerungssystem für ein Kraftfahrzeug, ein Verfahren zum Betreiben eines derartigen Steuerungssystems für ein Kraftfahrzeug sowie ein Kraftfahrzeug mit einem derartigen Steuerungssystem.

Bisher erfolgt in Kraftfahrzeugen die Kommunikation zwischen einzelnen Komponenten des Kraftfahrzeugs oftmals über Datenbusse. Über diese Datenbusse werden zyklisch in festen Zeitabschnitten Signale zwischen den einzelnen Komponenten gesendet. Im Falle von Konflikten zwischen diesen gesendeten Signalen erfolgt die Ansteuerung der Komponenten des Kraftfahrzeugs gemäß vorbestimmten Prioritätsvorschriften. Die zu sendenden Signale sind bereits vor der Auslieferung des Kraftfahrzeugs festgelegt, sodass zu einem späteren Zeitpunkt keine weiteren Signale hinzugefügt werden können. Dies bedeutet, dass alle in einem Kraftfahrzeug verfügbaren Fahrzeugfunktionen, das heißt alle Funktionen von Fahrerassistenzsystemen sowie jegliche Ansteuerung von Aktoren des Kraftfahrzeugs, bereits vor der Auslieferung des Kraftfahrzeugs festgelegt sind. Zudem sind alle Kommunikationsbeziehungen zwischen den einzelnen Steuergeräten innerhalb des Kraftfahrzeugs vorab definiert. Ein nachträgliches Integrieren beispielsweise eines neuen Fahrerassistenzsystems ist daher nur mit relativ großem Aufwand möglich.

In der DE 10 2005 048 337 A1 wird ein Verfahren beschrieben, mit dem eine kontinuierliche Überwachung der Funktionsfähigkeit eines Kraftfahrzeugs möglich ist. Die hierfür zur Verfügung stehenden Mechanismen umfassen unter anderem das Erkennen und Bewerten technischer Fehler, das schnelle sowie zeit- und ortsunabhängige Korrigieren dieser Fehler, beispielsweise durch Updates, sowie das Durchführen von Featureupgrades für elektronische Fahrzeugkomponenten. Im Rahmen dieses Verfahrens wird auf einen lokal im Fahrzeug angeordneten elektronischen Assistenten zugegriffen, der Fahrzeuginformationen kontinuierlich, in Zeitabständen oder ereignisgesteuert auf der Basis von in einer lokalen Assistenzdatenbank des elektronischen Assistenten gespeicherten Prüfregeln erfasst. Diese Fahrzeuginformationen werden daraufhin mit in einer lokalen Referenzdatenbank des elektronischen Assistenten gespeicherten Referenzdaten verglichen und bewertet. Je nachdem, wie das Bewertungsergebnis ausgefallen ist, trifft der elektronische Assistent eine Entscheidung über die Notwendigkeit einer Handlung. Sobald die Notwendigkeit einer Handlung festgestellt wurde, werden die Handlungsfunktionen, die notwendig sind, um eine Betriebsfunktion zu halten oder anzupassen, ausgeführt oder die Handlungsfunktion an eine ausführende Fahrzeugkomponente übermittelt.

In der DE 10 2009 045 936 A1 wird ein Fahrerassistenzsystem zum Einbau in ein Fahrzeug beschrieben, das eine Kommunikationsschnittstelle zum Empfangen von geräteeigenen Mensch-Maschinen-Schnittstelleelementen eines mobilen Geräts und eine Steuereinheit zur Verwendung der geräteeigenen Mensch-Maschine-Schnittstelleelemente aufweist. Beim Einsatz des mobilen Geräts im Fahrzeug wird dieses Fahrerassistenzsystem derart ausgeführt, dass es die übersandten geräteeigenen Mensch-Maschine-Schnittstelleelemente auf eine Authentifizierung hin überprüft, gegebenenfalls zulässt oder gegebenenfalls ein fahrzeugeigenes Standard-Mensch-Maschine-Schnittstelleelement zur Erzeugung einer bestimmten Funktion verwendet.

Die Druckschrift US 2013/0346751 A1 offenbart Kommunikationsverfahren zwischen Netzwerken unterschiedlicher Sicherheitsniveaus. Ein Authentifizierungsserver speichert für jedes Client-Terminal die Ebene eines Netzwerks, auf die das Client-Terminal zugreifen kann. Das heißt, die Ebene eines Netzwerks, auf die jedes Client-Endgerät zugreifen kann, und Zugriffsinformationen, z. B. ein Passwort, das für den Zugriff auf das Netzwerk erforderlich ist, werden zusammen mit der Kennung des Client-Terminals (z. B. der MAC-Adresse des Client-Terminals) gespeichert.

Des Weiteren offenbart die Druckschrift WO 2017/051170 A1 eine Verteilung kryptographischer Schlüssel. Ein Gateway-Modul verbindet zwei Unternetzwerke von elektronischen Steuereinheiten und überprüft die Kommunikation hinsichtlich Integrität. Das Verfahren ist skalierbar in Bezug auf mehrere Niveaus von Sicherheitskritikalität.

Es ist die Aufgabe der Erfindung, eine Lösung bereitzustellen, mittels welcher in ein bereits ausgeliefertes Kraftfahrzeug auf besonders einfache Weise neue Fahrerassistenzsysteme beziehungsweise Updates von Fahrerassistenzsystemen integriert werden können.

Diese Aufgabe wird durch ein Steuerungssystem für ein Kraftfahrzeug, ein Verfahren zum Betreiben eines derartigen Steuerungssystems eines Kraftfahrzeugs sowie ein Kraftfahrzeug mit einem derartigen Steuerungssystem gemäß den unabhängigen Ansprüchen gelöst.

Das erfindungsgemäße Steuerungssystem für ein Kraftfahrzeug umfasst einen zentralen Fahrzeugregler zum Ansteuern von Fahrzeugfunktionen sowie mehrere Fahrerassistenzsysteme. Die Fahrerassistenzsysteme sind dazu eingerichtet, die Fahrzeugfunktionen betreffende Steuerbefehle für ihre jeweiligen Assistenzfunktionen an den Fahrzeugregler zu übermitteln, ein die jeweiligen Assistenzfunktionen beschreibenden Aufgabenschlüssen an den Fahrzeugregler zu übermitteln und einen den jeweiligen Assistenzfunktionen zugeordneten Sicherheitsschlüssel an den Fahrzeugregler zu übermitteln. Der zentrale Fahrzeugregler ist dazu eingerichtet, anhand der übermittelten Aufgabenschlüssel eine jeweilige Aufgabe der Fahrerassistenzsysteme zu erkennen, eine Sicherheitsprüfung durchzuführen, indem der Fahrzeugregler anhand der jeweils übermittelten Sicherheitsschlüssel für die jeweils erkannten Aufgaben überprüft, ob der jeweilige Sicherheitsschlüssel mindestens einer jeweiligen Aufgabe zugeordnete Sicherheitsstufe erfüllt und, falls die Sicherheitsprüfung erfolgreich war, die Fahrzeugfunktion gemäß den jeweiligen von dem Fahrerassistenzsystem übermittelten Steuerbefehlen zur Durchführung der jeweiligen Assistenzfunktion anzusteuern.

Das erfindungsgemäß vorgeschlagene Steuerungssystem für ein Kraftfahrzeug weist somit zumindest eine Steuer- und Regeleinheit sowie mehrere Fahrerassistenzsysteme auf. Bei der Steuer- und Regeleinheit handelt es sich um eine zentrale Einheit im Kraftfahrzeug, den sogenannten zentralen Fahrzeugregler, der unter anderem verschiedene Aktoren des Kraftfahrzeugs ansteuern kann. Bei den mehreren Fahrerassistenzsystemen handelt es sich um elektrische Zusatzeinrichtungen im Kraftfahrzeug zur Unterstützung des Fahrers in bestimmten Fahrsituationen, wobei diese Fahrerassistenzsysteme für ihre jeweiligen Zusatzfunktionen Details zur Ausführung der Zusatzfunktionen an den zentralen Fahrzeugregler übermitteln können. Zudem können die Fahrerassistenzsysteme jeweils Signale mit Informationen zu der Rolle der jeweiligen Zusatzfunktion, sogenannte Aufgabenschlüssel, an den zentralen Fahrzeugregler senden. Zusätzlich zu diesem Aufgabenschlüssel werden Signale betreffend das Sicherheitsniveau des jeweiligen Fahrerassistenzsystems beziehungsweise der entsprechenden Zusatzfunktion des Fahrerassistenzsystems an den zentralen Fahrzeugregler übermittelt. Dieser Sicherheitsschlüssel enthält beispielsweise Informationen zu einem dem Fahrerassistenzsystem zugeordneten ASIL (Automotive Safety Integrity Level, siehe ISO 26262), das sich aus Informationen zur Schwere eines Fehlers des Fahrerassistenzsystems, der Eintrittswahrscheinlichkeit der Fahrsituation, in der ein Fehler zu einer Gefährdung führt, sowie Informationen zur Beherrschbarkeit des Fehlers zusammensetzt. Hierbei werden die ASIL QM, A, B, C und D unterschieden, von denen QM das niedrigste und D das höchste Sicherheitsniveau beschreiben. Als Sicherheitsschlüssel kann jedoch auch eine Einordnung der Funktionssicherheit der Fahrerassistenzsysteme gemäß einem anderen Gefährdungsstufen-Standard gewählt werden.

Der zentrale Fahrzeugregler selbst ist dazu eingerichtet, anhand der Aufgabenschlüssel festzustellen, welche Assistenzfunktionen die entsprechenden Fahrerassistenzsysteme ausführen möchten, das heißt welche Rollen die einzelnen Fahrerassistenzsysteme im Kraftfahrzeug einnehmen möchten. Sobald die jeweiligen Aufgaben der Fahrerassistenzsysteme erkannt wurden, führt der zentrale Fahrzeugregler eine Sicherheitskontrolle durch. Im Rahmen dieser Sicherheitskontrolle wird überprüft, ob der übermittelte Sicherheitsschlüssel den Mindestanforderungen an das benötigte Sicherheitsniveau der entsprechenden Aufgabe des Fahrerassistenzsystems genügt. Falls dies der Fall ist, erfolgt ein Steuern der Aktoren des Kraftfahrzeugs durch den zentralen Fahrzeugregler gemäß den vom Fahrerassistenzsystem übermittelten Details zur Ausführung der Assistenzfunktion. Die die einzelnen Fahrzeugfunktionen betreffenden Steuerbefehle, die dem zentralen Fahrzeugregler von den Fahrerassistenzsystemen bereitgestellt werden, werden somit bei erfolgreicher Sicherheitsprüfung von dem zentralen Fahrzeugregler durchgeführt.

Falls die Sicherheitsprüfung nicht erfolgreich war, kommt es zu keiner Ansteuerung der Aktoren des Kraftfahrzeugs gemäß den Steuerbefehlen der Fahrerassistenzsysteme. Auch falls eine mit einem entsprechenden Aufgabenschlüssel beschriebene Aufgabe eines der Fahrerassistenzsysteme dem zentralen Fahrzeugregler nicht bekannt ist, kommt es zu keiner Durchführung der jeweiligen Assistenzfunktion gemäß den jeweiligen von dem Fahrerassistenzsystem ermittelten Steuerbefehlen.

Das Steuerungssystem für ein Kraftfahrzeug umfasst zusätzlich zu dem zentralen Fahrzeugregler mehrere Fahrerassistenzsysteme, wie beispielsweise einen Einparkhilfeassistenten, einen Spurhalteassistenten oder einen Stauassistenten. Bei den Fahrzeugfunktionen, die von dem zentralen Fahrzeugregler angesteuert werden können, handelt es sich beispielsweise um einen Antrieb, eine Bremse oder eine Lenkung des Kraftfahrzeugs. Bevor das Kraftfahrzeug mithilfe beispielsweise des Einparkhilfeassistenten einparken kann, was gemäß einem entsprechenden, vom Einparkhilfeassistenten bereitgestellten Steuerbefehl erfolgen kann, übermittelt der Einparkhilfeassistent zunächst einen Aufgabenschlüssel an den zentralen Fahrzeugregler. Dieser Aufgabenschlüssel enthält die Information "Einparken" und somit die Rolle, die dieses Fahrerassistenzsystem innerhalb des Kraftfahrzeugs übernehmen möchte. Zusätzlich zu diesem Aufgabenschlüssel übermittelt der Einparkhilfeassistent auch den ihm zugeordneten Sicherheitsschlüssel an den zentralen Fahrzeugregler. Dieser Sicherheitsschlüssel enthält zum Beispiel die Information, dass der Einparkhilfeassistent ein ASIL D und somit die höchstmögliche Sicherheitsstufe aufweist.

Der zentrale Fahrzeugregler ist nun dazu eingerichtet, anhand des übermittelten Aufgabenschlüssels die Aufgabe des Einparkhilfeassistenten, das heißt die Aufgabe "Einparken", zu erkennen. Daraufhin wird im Rahmen der Sicherheitsüberprüfung festgestellt, dass der Einparkhilfeassistent über die für die Aufgabe "Einparken" vorausgesetzte Sicherheitsstufe verfügt, da er ein ASIL D aufweist. Nach der somit erfolgreich abgeschlossenen Sicherheitsprüfung durch den zentralen Fahrzeugregler wird daraufhin gemäß den Steuerbefehlen des Einparkhilfeassistenten ein Einparken des Kraftfahrzeugs durchgeführt. Falls der Einparkhilfeassistent ein deutlich niedrigeres Sicherheitsniveau aufweist, zum Beispiel ASIL A, oder falls dem zentralen Fahrzeugregler die Aufgabe "Einparken" nicht bekannt ist, führt der zentrale Fahrzeugregler aufgrund der somit nicht erfolgreich abgeschlossenen Sicherheitsprüfung nicht den Einparkvorgang gemäß den übermittelten Steuerbefehlen des Einparkhilfeassistenten durch.

Das erfindungsgemäß vorgeschlagene Steuerungssystem ist somit dazu eingerichtet, vor einem Ansteuern von Fahrzeugfunktionen gemäß den Steuerbefehlen von Fahrerassistenzsystemen zunächst zu überprüfen, ob diese Fahrerassistenzsysteme aufgrund ihrer Aufgaben innerhalb des Kraftfahrzeugs sowie ihrer Sicherheitsniveaus dazu berechtigt sind, Steuerbefehle zur Durchführung einer Assistenzfunktion des Kraftfahrzeugs bereitzustellen. Dadurch wird verhindert, dass entweder fehlerbedingt oder durch einen digitalen Angriff auf die Steuersysteme des Kraftfahrzeugs die Aktorik des Kraftfahrzeugs derart angesteuert wird, dass eine Gefährdung für die Fahrzeuginsassen und/oder das Fahrzeugumfeld entstehen können. Des Weiteren ist das Steuerungssystem dazu eingerichtet, die Assistenzfunktionen eines Fahrerassistenzsystems durchzuführen, die der zentrale Fahrzeugregler anhand ihrer jeweiligen Aufgabenschlüssel erkennt. Dies ermöglicht, dass neue Assistenzfunktionen beziehungsweise Updates von Assistenzfunktionen relativ leicht in das System integriert werden können, da dem zentralen Fahrzeugregler lediglich der entsprechende Aufgabenschlüssel bekannt sein muss, um diese neuen Assistenzfunktionen umsetzen zu können.

In weiterer vorteilhafter Ausgestaltung der Erfindung ist es vorgesehen, dass der Fahrzeugregler dazu eingerichtet ist, durch das Ansteuern der Fahrzeugfunktion das Kraftfahrzeug zu lenken, zu bremsen und/oder zu beschleunigen. Der zentrale Fahrzeugregler kann somit Einfluss auf die Lenkung, die Bremsen und den Antrieb und somit alle Aktoren des Kraftfahrzeugs ausüben. Zudem ist es möglich, dass der zentrale Fahrzeugregler auch weitere Fahrzeugkomponenten, wie zum Beispiel die Blinker des Kraftfahrzeugs oder die Lichtmaschine, ansteuern kann. Bei dem zentralen Fahrzeugregler handelt es sich somit um eine zentrale Einheit innerhalb des Kraftfahrzeugs, die die Kontrolle über die Fahrzeugbewegung ausüben kann, da sie zumindest den Antrieb, die Bremsen und die Lenkung des Kraftfahrzeugs ansteuern kann. Dies ist besonders vorteilhaft, da die Fahrerassistenzsysteme nun nicht einzeln dazu ausgelegt sein müssen, die einzelnen Aktoren des Kraftfahrzeugs anzusteuern, beispielsweise über dafür ausgelegte Datenbusse zwischen den Steuereinheiten der Fahrerassistenzsysteme und der Aktoren, sondern die Ansteuerung der Aktoren mithilfe entsprechender Kommunikationssignale an den zentralen Fahrzeugregler möglich ist.

In weiterer vorteilhafter Ausgestaltung der Erfindung ist es vorgesehen, dass der Fahrzeugregler dazu eingerichtet ist, vorbestimmte Aufgaben anzubieten, deren Aufgabenschlüssel im Fahrzeugregler hinterlegt sind. Dem zentralen Fahrzeugregler liegen somit Informationen über genau definierte Rollen einzelner Fahrerassistenzsysteme vor. Diese Aufgaben sind im zentralen Fahrzeugregler in Form von klar definierten Aufgabenschlüsseln abgespeichert. Der zentrale Fahrzeugregler ist somit dazu eingerichtet, verschiedene Services anzubieten, wie beispielsweise eine Geschwindigkeit einzustellen, eine Notbremsung durchzuführen oder bestimmte Vorgaben der Lenkungsführung durchzuführen. Weitere Aufgabe, die bisher nicht im zentralen Fahrzeugregler hinterlegt sind, können durch ein Update des Fahrzeugreglers neu hinzugefügt und somit vom Fahrzeugregler erlernt werden. Dies ermöglicht, dass auch in einem bereits ausgelieferten Kraftfahrzeug neue beziehungsweise überarbeitete Fahrerassistenzsystemfunktionen hinzugefügt werden können.

In weiterer vorteilhafter Ausgestaltung der Erfindung ist es vorgesehen, dass der Fahrzeugregler dazu eingerichtet ist, die jeweiligen Aufgaben der Fahrerassistenzsysteme durch ein Abgleich der ermittelten Aufgabenschlüssel mit den im Fahrzeugregler hinterlegten Aufgabenschlüsseln zu erkennen. Der Fahrzeugregler ist somit dazu eingerichtet, die übermittelten Aufgabenschlüssel mit den ihm bekannten Rollen zu vergleichen. Handelt es sich bei einem ermittelten Aufgabenschlüssel beispielsweise um den Aufgabenschlüssel "Einparken", vergleicht der zentrale Fahrzeugregler diese Information zunächst mit den ihm vorliegenden Aufgaben der Fahrerassistenzsysteme. Ist ihm die Aufgabe "Einparken" bekannt, liegen ihm Informationen darüber vor, welche Aktoren und andere Fahrzeugkomponenten gegebenenfalls im Rahmen dieser Aufgabe angesteuert werden müssen, wie in diesem Fall beispielsweise die Bremsen, der Antrieb, die Lenkung sowie die Blinker des Kraftfahrzeugs. Jeder dem Fahrzeugregler bekannten Aufgabe ist zudem ein Sicherheitsniveau zugeordnet, das mindestens von dem Fahrerassistenzsystem erfüllt sein muss, damit dieses Fahrerassistenzsystem, die jeweilige Aufgabe übernehmen kann. Diese Zuordnung der Aufgaben der Fahrerassistenzsysteme zu den Aufgabenschlüsseln ermöglicht ein besonders sicheres Steuern und Regeln des Kraftfahrzeugs mithilfe des zentralen Fahrzeugreglers.

In weiterer vorteilhafter Ausgestaltung der Erfindung ist es vorgesehen, dass die Fahrzeugfunktion jeweils Steuereinheiten aufweisen, welche dazu ausgebildet sind, beim Starten des Kraftfahrzeugs die von der jeweiligen Fahrzeugfunktion durchführbaren Aufgaben an den Fahrzeugregler zu übermitteln. Sobald das Kraftfahrzeug aktiviert wird, melden sich also die einzelnen Fahrzeugfunktionen mithilfe jeweiliger Steuereinheiten beim zentralen Fahrzeugregler an. Im zentralen Fahrzeugregler muss daher nicht gespeichert werden, welche Fahrzeugfunktionen, also beispielsweise welche Aktoren, vom zentralen Fahrzeugregler ansteuerbar sind, denn bei jedem Start des Kraftfahrzeugs werden dem Fahrzeugregler die verfügbaren Fahrzeugfunktionen von den jeweiligen Steuereinheiten der Fahrzeugfunktion mitgeteilt. Nach einem Starten des Kraftfahrzeugs sendet beispielsweise die Steuereinheit der Blinker des Kraftfahrzeugs an den zentralen Fahrzeugregler das Signal, dass die Blinker verfügbar sind und somit eine Aufgabe "Blinken" sowie weitere Aufgaben, die ein Ansteuern der Blinker umfassen, durch das Übermitteln des Aufgabenschlüssels "Blinken" beziehungsweise eines anderen entsprechenden Aufgabenschlüssels durchgeführt werden können. Dem zentralen Fahrzeugregler liegen somit unmittelbar nach dem Starten des Kraftfahrzeugs Informationen über die im Kraftfahrzeug vorhandenen und funktionsfähigen Fahrzeugfunktionen vor. Hierdurch wird sichergestellt, dass der zentrale Fahrzeugregler nur die Aufgaben erkennt und gegebenenfalls zulässt, die tatsächlich durch eine entsprechende Ansteuerung der Fahrzeugfunktionen des Kraftfahrzeugs umgesetzt werden können .

In weiterer vorteilhafter Ausgestaltung der Erfindung ist es vorgesehen, dass innerhalb des Steuerungssystems jeglicher weiterer Datenaustausch zwischen dem Fahrzeugregler und den Steuereinheiten der Fahrzeugfunktion auf Anfrage der Fahrerassistenzsysteme im Rahmen der Durchführung der jeweiligen Assistenzfunktion erfolgt. Es ist also nach dem Anmelden der einzelnen Fahrzeugfunktion bei dem zentralen Fahrzeugregler vorgesehen, dass daraufhin ein rein servicebasiertes Kommunikationsprotokoll durchgeführt wird. Im Rahmen dieses Kommunikationsprotokolls ist es vorgesehen, dass die einzelnen Fahrzeugfunktionen über ihre Steuereinheiten nur dann dem zentralen Fahrzeugregler Daten, beispielweise Steuerbefehle, übermitteln, wenn von zumindest einem der Fahrerassistenzsysteme ein Ansteuern der entsprechenden Fahrzeugfunktionen angefordert wird.

Soll beispielsweise mithilfe des Einparkhilfeassistenten das Kraftfahrzeug eingeparkt werden, beinhaltet der Aufgabenschlüssel "Einparken" gegebenenfalls ein Blinken des Kraftfahrzeugs, um den Einparkvorgang anderen Verkehrsteilnehmern zu signalisieren. In diesem Fall wird nach erfolgreicher Sicherheitsüberprüfung beim Durchführen der Assistenzfunktion "Einparken" gemäß den Steuerbefehlen des Einparkhilfeassistenten der zentrale Fahrzeugregler durch entsprechenden Datenaustausch mit der Steuereinheit der Blinker ein Blinken eines der Blinker des Kraftfahrzeugs veranlassen. Im Vergleich zu herkömmlichen Kommunikationsprotokollen in Kraftfahrzeugen wird die Steuereinheit der Blinker nach dem Starten des Kraftfahrzeugs also nicht kontinuierlich in bestimmten Zeitabständen immer wieder die Statusmeldung "Blinker verfügbar" an den zentralen Fahrzeugregler übermitteln, sondern sich lediglich einmal nach dem Starten des Kraftfahrzeugs beim zentralen Fahrzeugregler anmelden und danach auf entsprechende Signale vom Fahrzeugregler warten, die gesendet werden, sobald eine Anfrage der Blinker von einem Fahrerassistenzsystem erfolgt ist.

Alternativ dazu ist es möglich, dass vorgesehen ist, dass einzelne Fahrzeugfunktionen über ihre Steuerungssysteme einen Ausfall ihrer Fahrzeugfunktion beziehungsweise zumindest eines Teils ihrer Fahrzeugfunktion an den zentralen Fahrzeugregler mithilfe eines entsprechenden Signals melden. In diesem Falle wird zusätzlich zu dem anfänglichen Anmelden der Fahrzeugfunktion beim zentralen Fahrzeugregler und zusätzlich zum Datenaustausch im Rahmen der Anfrage der Durchführung der jeweiligen Assistenzfunktion eines Fahrerassistenzsystems ein Datenaustausch zwischen dem zentralen Fahrzeugregler und der Fahrzeugfunktion stattfinden.

Generell ermöglicht dieses servicebasierte Kommunikationsprotokoll zwischen den Komponenten des Steuerungssystems, dass die Kommunikation zwischen den einzelnen Komponenten des Steuerungssystems, das heißt zwischen dem zentralen Fahrzeugregler, dem Fahrerassistenzsystem und den Fahrzeugfunktionen der einzelnen Steuereinheiten, mit relativ geringem Aufwand erfolgt.

In weiterer vorteilhafter Ausgestaltung der Erfindung ist es vorgesehen, dass der Fahrzeugregler dazu eingerichtet ist, im Rahmen der Sicherheitsüberprüfung zusätzlich zu überprüfen, ob den jeweiligen Aufgaben zugeordnete Soll-Vorgaben bezüglich der aktuellen Fahrsituation des Kraftfahrzeugs erfüllt sind und, falls diese Überprüfung erfolgreich war, die Fahrzeugfunktionen gemäß den jeweiligen von dem Fahrerassistenzsystem ermittelten Steuerbefehlen zur Durchführung der jeweiligen Assistenzfunktion anzusteuern. Während der Sicherheitsüberprüfung wird also vom dem zentralen Fahrzeugregler auch kontrolliert, inwiefern ein momentaner Zustand des Kraftfahrzeugs sowie dessen Randbedingungen vorbestimmten Soll-Werten entsprechen. Nur wenn diese zusätzlichen Soll-Vorgaben ebenfalls erfüllt sind, gilt die Sicherheitsprüfung als erfolgreich und es kann ein Durchführen der entsprechenden Assistenzfunktionen der Fahrerassistenzsysteme erfolgen. Die Sicherheitsüberprüfung kann somit ein Abgleichen des Aufgabenschlüssels mit dem entsprechenden Sicherheitsschlüssel sowie ein Überprüfen der aktuellen Fahrsituation beinhalten. Im Rahmen der Sicherheitsüberprüfung des von einem Einparkhilfeassistenten ermittelten Aufgabenschlüssels "Einparken" und dem Sicherheitsschlüssel ASIL D wird also zusätzlich überprüft, ob gewisse Soll-Vorgaben erfüllt sind, die die aktuelle Fahrsituation sowie die Umgebung des Kraftfahrzeugs betreffen. Hierbei handelt es sich im Falle eines Einparkhilfeassistenten beziehungsweise im Falle des Aufgabenschlüssels "Einparken" um Soll-Vorgaben betreffend die Geschwindigkeit des Kraftfahrzeugs sowie dessen Positionierung in der Nähe eines möglichen Parkplatzes. Dies ermöglicht ein besonders sinnvolles Ansteuern der Aktoren eines Kraftfahrzeugs, da dieses Ansteuern nur in Situationen möglich ist, in denen eine entsprechende Ansteuerung sinnvoll ist.

In weiterer vorteilhafter Ausgestaltung der Erfindung ist es vorgesehen, dass der Fahrzeugregler dazu eingerichtet ist, als den jeweiligen Aufgaben zugeordneten Soll-Vorgaben zumindest einen Geschwindigkeitsbereich, einen Fahreranwesenheitsnachweis und/oder Vorgaben zur Fahrzeugumgebung zu überprüfen. Bei den Soll-Vorgaben, die im Rahmen der Sicherheitsüberprüfung zusätzlich überprüft werden, handelt es sich also um minimale und maximale Geschwindigkeitswerte, um Information darüber, ob ein Fahrer des Kraftfahrzeugs im Fahrzeuginneren anwesend ist und/oder um Informationen zu den Randbedingungen des Kraftfahrzeugs. Für einen Einparkhilfeassistenten wird beispielsweise zumindest überprüft, ob der Geschwindigkeitsbereich, der für ein Einparken des Kraftfahrzeugs vorgesehen ist und üblicherweise bei Geschwindigkeiten unter 12 Kilometern pro Stunde liegt, gegeben ist. Zudem wird mithilfe von entsprechenden Sensoreinheiten des Kraftfahrzeugs überprüft, ob sich in der Fahrzeugumgebung ein Parkplatz für das Kraftfahrzeug befindet. Zudem kann es vorgeschrieben sein, dass für ein Einparken mithilfe des Einparkhilfeassistenten ein Fahrer des Kraftfahrzeugs im Fahrzeug anwesend sein soll, was beispielsweise anhand eines in die Sitze des Kraftfahrzeugs integrierten Waagesystems überprüft werden kann. Falls diese Bedingungen alle aktuell erfüllt sind und zudem der Aufgabenschlüssel und der Sicherheitsschlüssel, die vom Einparkhilfeassistenten an den zentralen Fahrzeugregler übermittelt wurde, die entsprechenden Voraussetzungen erfüllen, kann nun die Sicherheitsprüfung für den Einparkhilfeassistenten als erfolgreich angesehen werden. Daraufhin erfolgt die Durchführung des Einparkvorgangs des Kraftfahrzeugs gemäß den vom Einparkhilfeassistenten übermittelten Steuerbefehlen. Weitere Grenzwertsollbereiche, die erfüllt sein müssen, betreffen beispielsweise die herrschenden Lichtverhältnisse, Reibungswerte oder Witterungsbedingungen. Nach der erfolgreicher derart umfangreicher Sicherheitsüberprüfung ist somit ein besonders sicheres Steuern des Kraftfahrzeugs mithilfe des zentralen Fahrzeugreglers, der Fahrerassistenzsysteme und der Fahrzeugfunktionen möglich.

In weiterer vorteilhafter Ausgestaltung der Erfindung ist es vorgesehen, dass der Fahrzeugregler dazu eingerichtet ist, falls dieser für mehrere Fahrerassistenzsysteme jeweils erfolgreiche Sicherheitsüberprüfung durchgeführt hat, gemäß einer vorbestimmten Auswahlroutine eine Reihenfolge der Durchführung der jeweiligen Assistenzfunktion festzulegen. Dem zentralen Fahrzeugregler liegt somit ein Arbitrierungskonzept vor, mit dem widerspruchsfrei die Fahrzeugfunktionen des Kraftfahrzeugs angesteuert werden können. Mit diesem Arbitrierungskonzept kann der zentrale Fahrzeugregler sowohl auf zeitgleich als auch auf zeitnah von ihm empfangene Anfragen von Fahrerassistenzsystemen reagieren und die sinnvollste Abfolge der Durchführung der einzelnen Assistenzfunktionen bestimmen. Mithilfe der vorbestimmten Auswahlroutine kann zum Beispiel verhindert werden, dass das Kraftfahrzeug gleichzeitig abgebremst und beschleunigt wird. Als Voraussetzung für das Durchführen der vorbestimmten Auswahlroutine müssen dem zentralen Fahrzeugregler Informationen über die Aufgaben der Fahrerassistenzsysteme vorliegen. Das heißt, der Fahrzeugregler muss darüber informiert sein, welche Aufgaben welche Fahrerassistenzsysteme zu welchem Zeitpunkt übernehmen möchten und ob sie zur Durchführung dieser Aufgaben gemäß ihrer Sicherheitsschlüssel vorgesehen sind. Dies ermöglicht eine besonders sichere Funktionsweise des Steuerungssystems.

In weiterer vorteilhafter Ausgestaltung der Erfindung ist es vorgesehen, dass in das Steuerungssystem zusätzliche Fahrerassistenzsysteme integrierbar sind, falls die jeweiligen Assistenzfunktionen dieser Fahrerassistenzsysteme mit den dem Fahrzeugregler bekannten Aufgabenschlüsseln beschreibbar sind. In das Steuerungssystem können also weitere Fahrerassistenzsysteme aufgenommen werden, falls die Aufgaben dieser Fahrerassistenzsysteme und somit ihre Assistenzfunktionen den dem zentralen Fahrzeugregler bereits hinterlegten Aufgaben zugeordnet werden können. Soll zum Beispiel in ein Kraftfahrzeug zusätzlich ein Notbremsassistent integriert werden, der letztendlich ein bestimmtes Ansteuern der Bremsen des Kraftfahrzeugs vornehmen möchte, kann entweder die Aufgabe "Notbremsen" bereits im zentralen Fahrzeugregler hinterlegt sein oder der Notbremsassistenz seine Aufgabe mit dem Aufgabenschlüssel "Bremsen" beschreiben, der dem zentralen Fahrzeugregler bekannt ist. Sobald eine entsprechende Software des Kraftfahrzeugs nun mithilfe eines Updates, das beispielsweise über eine entsprechende Kommunikationsverbindung mit einem externen Server oder mithilfe eines mobilen Datenträgers, wie beispielsweise eines USB-Sticks, an einer Schnittstelle des Kraftfahrzeugs in die Kraftfahrzeugsoftware integriert wurde, kann dieses zusätzliche Fahrerassistenzsystem verwendet werden, falls der entsprechende Aufgabenschlüssel des Fahrerassistenzsystems bereits im zentralen Fahrzeugregler hinterlegt ist. Alternativ ist es auch möglich, dass ein Update des zentralen Fahrzeugreglers durchgeführt wird, sodass diesem zusätzliche neue Aufgaben wie zum Beispiel die Aufgabe "Notbremsen" nachträglich, das heißt in einem bereits ausgelieferten Kraftfahrzeug, hinzugefügt wird. Es ist zudem möglich, zusätzliche Fahrerassistenzsysteme temporär, beispielsweise im Rahmen eines entsprechenden Abonnements zu aktivieren, beispielsweise mithilfe eines entsprechenden Datenaustauschs des Kraftfahrzeugs über die Kommunikationsverbindung mit dem externen Server. Dieser externe Server kann vom Fahrzeughersteller oder einem entsprechenden Dienstleister bereitgestellt werden. Dies ermöglicht eine besonders vorteilhafte und leicht durchzuführende Integration zusätzlicher Fahrerassistenzsysteme in ein bereits ausgeliefertes Kraftfahrzeug.

In weiterer vorteilhafter Ausgestaltung der Erfindung ist es vorgesehen, dass die Fahrerassistenzsysteme dazu eingerichtet sind, die Aufgaben- und Sicherheitsschlüssel derart zu übermitteln, dass deren Datensätze gegen eine unbeabsichtigte Änderung eines einzelnen Bits durch zufällige Hardware-Fehler innerhalb der jeweiligen Datensätze abgesichert sind. Die Aufgaben- und Sicherheitsschlüssel werden also derart innerhalb des Kraftfahrzeugs von den entsprechenden Fahrerassistenzsystemen an den zentralen Fahrzeugregler gesendet, dass diese Daten gegen sogenannte Bit-Flips, das heißt gegen unbeabsichtigte Änderungen eines einzelnen Bits innerhalb eines Datensatzes, abgesichert sind. Ein solcher Bit-Flip kann entweder durch einen technischen Fehler oder durch entsprechende Einwirkungen von außen entstehen, zum Beispiel verursacht durch den Einfluss elektromagnetischer Strahlung. Um eine gegen Bit-Flips abgesicherte Übermittlung des Aufgaben- und Sicherheitsschlüssels zu ermöglichen, werden diese Schlüssel nicht beispielsweise als Drei-Bit-Dateien übermittelt, sondern als deutlich größere Dateien, beispielsweise als 64-Byte-Zahlenwerte. Dadurch wird die Wahrscheinlichkeit der Übermittlung eines fehlerhaften Aufgaben- und Sicherheitsschlüssels aufgrund eines Bit-Flips relativ gering. Es wird also auf Methoden zur Verhinderung beziehungsweise zur Reduzierung der Bit-Flip-Wahrscheinlichkeit in Datensätzen zurückgegriffen. Dies ermöglicht ein besonders abgesichertes und außerdem nur gering fehleranfälliges Übermitteln der Aufgaben- und Sicherheitsschlüssel von dem Fahrerassistenzsystem an den zentralen Fahrzeugregler.

In weiterer vorteilhafter Ausgestaltung der Erfindung ist es vorgesehen, dass die Fahrerassistenzsysteme dazu eingerichtet sind, die Aufgaben- und Sicherheitsschlüssel kryptographisch verschlüsselt zu übermitteln. Es ist also zudem vorgesehen, dass die Aufgaben- und Sicherheitsschlüssel nicht nur gegen sogenannte Bit-Flips abgesichert werden, sondern zusätzlich verschlüsselt übermittelt werden, um besonders widerstandsfähig gegen Manipulationen wie unbefugtes Lesen übertragen zu werden. Dies erhöht zusätzlich das Sicherheitsniveau des Datenaustauschs im Steuerungssystem für ein Kraftfahrzeug.

In weiterer vorteilhafter Ausgestaltung der Erfindung ist es vorgesehen, dass innerhalb des Steuerungssystems jeglicher Datenaustausch zwischen dem Fahrzeugregler und den Fahrerassistenzsystemen selbst kryptographisch verschlüsselt ist. Zusätzlich zu den beiden genannten Sicherheitsmechanismen, das heißt zusätzlich zu den Maßnahmen gegen sogenannte Bit-Flips sowie der kryptographischen Verschlüsselung der Aufgaben- und Sicherheitsschlüssel, kann also jeglicher Kommunikationsaustausch zwischen den einzelnen Komponenten des Steuerungssystems, das heißt insbesondere zwischen dem Fahrzeugregler und den Fahrerassistenzsystemen selbst, zusätzlich verschlüsselt und somit widerstandsfähig gegen Manipulation und unbefugtes Lesen gestaltet werden. Dies ermöglicht eine besondere Absicherung des Steuerungssystems gegenüber fremden Zugriffen, beispielsweise durch Hacking, auf den Fahrzeugregler sowie die Fahrerassistenzsysteme.

Erfindungsgemäß ist zudem ein Verfahren zum Betreiben eines Steuerungssystems eines Kraftfahrzeugs, wie es bereits oben beschrieben wurde, vorgesehen, welches die folgenden Schritte umfasst: Übermitteln des Aufgabenschlüssels von wenigstens einem der Fahrerassistenzsysteme an den Fahrzeugregler, Übermitteln des Sicherheitsschlüssels von dem wenigstens einen der Fahrerassistenzsysteme an den Fahrzeugregler, Durchführen der Sicherheitsprüfung für den übermittelten Aufgaben- und Sicherheitsschlüssel durch den Fahrzeugregler und Ansteuern der wenigstens einen entsprechenden Fahrzeugfunktion durch den Fahrzeugregler gemäß der von dem wenigstens einen der Fahrerassistenzsysteme übermittelten Steuerbefehle zur Durchführung der entsprechenden Assistenzfunktion, falls die Sicherheitsprüfung erfolgreich war. Dieses Verfahren beinhaltet folglich zunächst das Übersenden des Aufgabe- sowie des Sicherheitsschlüssels von wenigstens einer der Fahrerassistenzsysteme an den zentralen Fahrzeugregler. Diese beiden Schlüssel können entweder nacheinander oder zeitgleich oder alternativ sogar zusammen als eine Datei übermittelt werden. Nachdem der Aufgabenschlüssel und der Sicherheitsschlüssel von dem zentralen Fahrzeugregler empfangen wurden, führt dieser die sogenannte Sicherheitsprüfung durch, bei der ermittelt wird, ob der übermittelte Sicherheitsschlüssel die für die gemäß dem Aufgabenschlüssel erkannte Aufgabe zumindest die dieser Aufgabe zugeordnete Sicherheitsstufe erfüllt. Falls diese Sicherheitsprüfung erfolgreich war, wird in einem nächsten Schritt die Fahrzeugfunktion, die gemäß dem Aufgabenschlüssel von dem Fahrerassistenzsystem angesteuert werden soll, gemäß der von dem Fahrerassistenzsystem an den zentralen Fahrzeugregler übermittelten Steuerbefehle zur Durchführung der entsprechenden Assistenzfunktionen angesteuert.

Erfindungsgemäß ist außerdem ein Kraftfahrzeug vorgesehen, welches ein Steuerungssystem, wie es oben beschrieben wurde, umfasst.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

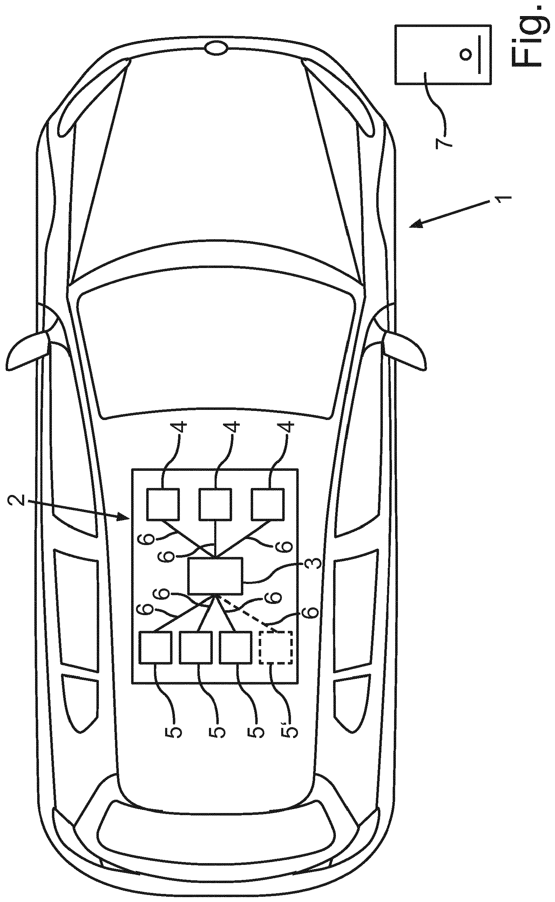

Im Folgenden ist ein Ausführungsbeispiel der Erfindung beschrieben. Hierzu zeigt die einzige Figur eine schematische Darstellung eines Kraftfahrzeugs mit einem Steuerungssystem.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In der einzigen Figur ist ein Kraftfahrzeug 1 skizziert, das ein Steuerungssystem 2 aufweist. Das Steuerungssystem 2 umfasst einen zentralen Fahrzeugregler 3 sowie drei Fahrzeugfunktionen 4 und drei Fahrerassistenzsysteme 5. Bei den drei Fahrzeugfunktionen 4 handelt es sich beispielsweise um eine Bremse, einen Antrieb und eine Lenkung des Kraftfahrzeugs 1. Bei den drei Fahrerassistenzsystemen 5 handelt es sich beispielsweise um einen Einparkhilfeassistenten, einen Spurhalteassistenten sowie einen Stauassistenten. Sowohl die drei Fahrzeugfunktionen 4 als auch die drei Fahrerassistenzsysteme 5 verfügen jeweils über Kommunikationsverbindungen 6 zum zentralen Fahrzeugregler 3. Der zentrale Fahrzeugregler 3 ist dazu eingerichtet, die drei Fahrzeugfunktionen 4 anzusteuern, das heißt er ist dazu eingerichtet, das Kraftfahrzeug 1 zu bremsen, zu lenken und zu beschleunigen beziehungsweise abzubremsen.

Ist nun angedacht, dass das Kraftfahrzeug 1 mithilfe des Einparkhilfeassistenten, das heißt mithilfe einem der Fahrerassistenzsysteme 5, eingeparkt wird, übermittelt das entsprechende Fahrerassistenzsystem 5 zunächst einen Aufgabenschlüssel an den zentralen Fahrzeugregler 3. Dieser Aufgabenschlüssel enthält Informationen zu der Aufgabe innerhalb des Kraftfahrzeugs 1, die das entsprechende Fahrerassistenzsystem 5, das heißt in diesem Fall der Einparkhilfeassistent, durchführen möchte. Zudem übermittelt das entsprechende Fahrerassistenzsystem 5 einen Sicherheitsschlüssel an den zentralen Fahrzeugregler 3, der Informationen über ein ASIL (Automotive Safety Integrity Level) des entsprechenden Fahrerassistenzsystems 5 enthält. Im Falle des Einparkhilfeassistenten wird also der Aufgabenschlüssel "Einparken" sowie der Sicherheitsschlüssel ASIL D übermittelt.

Daraufhin überprüft der zentrale Fahrzeugregler 3, ob die übermittelte Sicherheitsstufe, das heißt ob der Sicherheitsschlüssel, zu der Aufgabe passt, die dem zentralen Fahrzeugregler 3 in Form des Aufgabenschlüssels von dem Fahrerassistenzsystem 5 übermittelt wurde. In diesem Fall ist ASIL D, die höchstmögliche ASIL-Sicherheitsstufe, ausreichend, um die Aufgabe "Einparken" durchzuführen. Die Sicherheitsprüfung des zentralen Fahrzeugreglers 3 war somit erfolgreich, sodass daraufhin ein Ansteuern der Fahrzeugfunktionen 4 gemäß den Vorgaben des entsprechenden Fahrerassistenzsystems 5 möglich ist. Das Fahrerassistenzsystem 5 stellt daher zusätzlich Steuerbefehle für den zentralen Fahrzeugregler 3 bereit, gemäß derer die Durchführung der jeweiligen Assistenzfunktion des Fahrerassistenzsystems 5, in diesem Fall der Einparkvorgang, erfolgt. Diese Steuerbefehle werden ebenfalls über die Kommunikationsverbindung 6 an den zentralen Fahrzeugregler 3 weitergegeben. Voraussetzung für das Durchführen der Sicherheitsprüfung ist zudem, dass der zentrale Fahrzeugregler 3 auf mehrere ihm hinterlegte Aufgabenschlüssel zugreifen kann, sodass ein ihm übermittelter Aufgabenschlüssel durch einen Abgleich mit dem hinterlegten Aufgabenschlüssel einer bestimmten Aufgabe des entsprechenden Fahrerassistenzsystems 5 zugeordnet werden kann. Sind dem zentralen Fahrzeugregler 3 beispielsweise die Aufgaben beziehungsweise die Aufgabenschlüsselbezeichnungen "Einparken", "Spurhalten" und "Fahrzeugführung im Stau" bekannt, kann er den vom Fahrerassistenzsystem 5 übermittelten Aufgabenschlüssel "Einparken" eindeutig einer ihm bekannten Aufgabe zuordnen.

Auch falls ein weiteres Fahrerassistenzsystem 5' in das Steuerungssystem 2 integriert werden soll, beispielsweise ein Notbremsassistent, ist dies möglich, indem die Software für diesen Notbremsassistenten auf eine entsprechende Softwarekomponente im Kraftfahrzeug 1 geladen wird, die über eine Kommunikationsverbindung 6 mit dem zentralen Fahrzeugregler 3 verbunden ist. Wurde dem zentralen Fahrzeugregler 3 bereits die Aufgabe "Notbremsen" hinterlegt, kann dieser daraufhin die Steuerbefehle des neu installierten Fahrerassistenzsystems 5', des Notbremsassistenten, ohne weiteres durch entsprechendes Ansteuern der Fahrzeugfunktionen 4 durchführen.

Zum Integrieren des neuen Fahrerassistenzsystems 5' oder zum Integrieren neuer Aufgabenschlüssel in den zentralen Fahrzeugregler 3 kann ein Update mithilfe eines externen Servers 7 erfolgen. Hierbei werden die entsprechenden Daten beispielsweise über eine Funkverbindung von dem externen Server 7 zu den entsprechenden Einheiten des Steuerungssystems 2 übermittelt. Alternativ dazu ist es auch möglich, über eine entsprechende Schnittstelle für einen Datenträger innerhalb des Kraftfahrzeugs 1 das neue Fahrerassistenzsystem 5' oder die Updates des zentralen Fahrzeugreglers 3 vor Ort innerhalb des Kraftfahrzeugs 1 zu installieren. Es ist daher mit relativ geringem Aufwand möglich, nachträglich in ein bereits ausgeliefertes Kraftfahrzeug 1 neue Fahrerassistenzsysteme 5' beziehungsweise Updates von Fahrerassistenzsystemen 5 durchzuführen.

Im Rahmen der Sicherheitsprüfung kann zudem vom zentralen Fahrzeugregler 3 kontrolliert werden, ob die aktuelle Fahrsituation des Kraftfahrzeugs 1 die Aktivierung beziehungsweise Durchführung der gewünschten Aufgabe des Fahrerassistenzsystems 5 sinnvoll und somit möglich ist. Dadurch ist es möglich, dass beispielsweise das Ansteuern des Kraftfahrzeugs 1 gemäß den Steuerbefehlen eines Einparkhilfeassistenten als Fahrerassistenzsystem 5 unterbunden wird, wenn das Kraftfahrzeug 1 schneller als 5 Kilometer pro Stunde fährt. Generell wird im Rahmen dieser zusätzlichen Sicherheitskontrolle beim Abgleichen der aktuellen Fahrsituation mit den jeweiligen den Aufgaben zugeordneten Soll-Vorgaben ein Geschwindigkeitsbereich, ein Fahreranwesenheitsnachweis und/oder Vorgaben zur Fahrzeugumgebung überprüft. Hierzu greift der zentrale Fahrzeugregler 3 auf weitere Sensoren und Messeinrichtungen innerhalb und gegebenenfalls auch außerhalb des Kraftfahrzeugs 1 zu, beispielsweise auf Außenkameras, Innenkameras, Einrichtungen zum Feststellen, ob ein Fahrer im Kraftfahrzeug 1 anwesend ist oder nicht, oder GPS-Positionsdaten. Diese den jeweiligen Aufgaben zugeordneten Soll-Vorgaben sind beispielsweise für den Einparkhilfeassistenten als Fahrerassistenzsystem 5 erfüllt, wenn die aktuelle Geschwindigkeit des Kraftfahrzeugs 1 unterhalb von 12 Kilometern pro Stunde liegt, ein Fahrer im Kraftfahrzeug 1 anwesend ist und anhand der Umgebungsaufnahmen durch Außenkameras des Kraftfahrzeugs 1 sowie GPS-Positionsdaten festgestellt wurde, dass sich das Kraftfahrzeug 1 unmittelbar in der Nähe eines möglichen Parkplatzes befindet.

Das Steuerungssystem 2 verfügt zudem über eine vorbestimmte Auswahlroutine, gemäß der die Reihenfolge der Durchführung der jeweiligen Assistenzfunktionen geregelt wird, falls in etwa zeitgleich mehrere Fahrerassistenzsysteme 5 jeweilige Aufgabenschlüssel sowie Sicherheitsschlüssel an den zentralen Fahrzeugregler 3 übermitteln. Empfängt der zentrale Fahrzeugregler 3 beispielsweise in etwa zeitgleich einen Aufgabenschlüssel von dem Einparkhilfeassistenten sowie einen Aufgabenschlüssel von einem Spurhalteassistenten, also von zwei unterschiedlichen Fahrerassistenzsystemen 5, kann mithilfe dieser Auswahlroutine festgelegt werden, in welcher Reihenfolge die Fahrerassistenzsysteme 5 über den zentralen Fahrzeugregler 3 auf die Fahrzeugfunktionen 4 zugreifen können. Befindet sich das Kraftfahrzeug 1 beispielsweise momentan in einem Stau auf einer Schnellstraße, wird zunächst mithilfe des Stauassistenten das Kraftfahrzeug 1 gesteuert. Sobald das Kraftfahrzeug 1 jedoch die Schnellstraße verlassen hat und sich dem Ort eines potentiellen Parkplatzes nähert, wird der Einparkhilfeassistent durch ein Ansteuern des Kraftfahrzeugs 1 gemäß der vom Einparkhilfeassistenten ermittelten Steuerbefehle das Kraftfahrzeug 1 steuern.

Um zu vermeiden, dass aufgrund von Bit-Flips, die Aufgaben- und Sicherheitsschüssel fehlerhaft von den Fahrerassistenzsystemen 5 an den zentralen Fahrzeugregler 3 übermittelt werden, werden diese Schlüssel als 64-Byte-Zahlenwerte anstelle von einfachen Drei-Bit-Zahlenwerten übermittelt. Zudem können die Aufgaben- und Sicherheitsschlüssel kryptographisch verschlüsselt werden, um diese widerstandsfähig gegen Manipulationen und unbefugtes Lesen zu übermitteln. Alternativ ist es auch möglich, dass der Datenaustausch zwischen dem zentralen Fahrzeugregler 3 und den Fahrzeugfunktionen 4 sowie den Fahrerassistenzsystemen 5 selbst kryptographisch verschlüsselt ist, sodass das System besonders vorteilhaft vor Hackerangriffen geschützt ist.

Die Steuereinheiten der einzelnen Fahrzeugfunktionen 4, das heißt der einzelnen Komponenten des Kraftfahrzeugs 1 wie Bremsen, Lenkung oder Antrieb, übermitteln zudem nach dem Starten des Kraftfahrzeugs 1 über die Kommunikationsverbindung 6 an den zentralen Fahrzeugregler 3 die Information, dass diese Fahrzeugfunktionen 4 nun vorhanden sind. Es finden also bei jedem Start des Kraftfahrzeugs 1 ein Anmelden der einzelnen Fahrzeugfunktionen 4 beim zentralen Fahrzeugregler 3 statt. Jegliche weitere Kommunikationen beziehungsweise jeder weitere Datenaustausch zwischen dem zentralen Fahrzeugregler 3 und den Steuereinheiten der Fahrzeugfunktionen 4 finden in der Regel auf Anfrage einer der Fahrerassistenzsysteme 5, das heißt im Rahmen der Durchführung der jeweiligen Assistenzfunktionen der Fahrerassistenzsysteme 5, statt. Dies ermöglicht eine servicebasierte Kommunikation innerhalb des Steuerungssystems 2, sodass keine kontinuierlichen Meldungen des Status der einzelnen Fahrzeugfunktionen 4 beim zentralen Fahrzeugregler 3, wie es in herkömmlichen Steuersystemen 2 üblich ist, nötig sind.

Insgesamt zeigt das Beispiel, dass mit dem Steuerungssystem 2 für ein Kraftfahrzeug 1 eine servicebasierte Ansteuerung einzelner Fahrzeugfunktionen 4 gemäß den Steuerbefehlen entsprechender Fahrerassistenzsysteme 5 über einen zentralen Fahrzeugregler 3 möglich ist. Bevor die entsprechenden Fahrzeugfunktionen 4 jedoch gemäß dieser Steuerbefehle angesteuert werden, erfolgt zunächst das Abgleichen eines Aufgaben- und eines Sicherheitsschlüssels, der dem zentralen Fahrzeugregler 3 von dem entsprechenden Fahrerassistenzsystem 5 übermittelt wurde. Nur wenn diese Sicherheitsüberprüfung, das heißt das Abgleichen des Aufgabenschlüssels mit den dem zentralen Fahrzeugregler 3 vorliegenden möglichen Aufgaben der Fahrerassistenzsysteme 5 sowie das Abgleichen des Aufgabenschlüssels mit dem zum Durchführen dieser Aufgabe benötigten Sicherheitsniveau anhand des Sicherheitsschlüssels erfolgreich war, erfolgt eine Ansteuerung der Fahrzeugfunktionen 4 gemäß den Vorgaben des Fahrerassistenzsystems 5 durch den zentralen Fahrzeugregler 3. Das Steuerungssystem 2 ermöglicht somit eine besonders sinnvolle und widerspruchsfreie und zudem abgesicherte Steuerung des Kraftfahrzeugs 1.

### Bezugszeichenliste

- 1: Kraftfahrzeug
- 2: Steuerungssystem
- 3: zentraler Fahrzeugregler
- 4: Fahrzeugfunktion
- 5: Fahrerassistenzsystem
- 5': Fahrerassistenzsystem
- 6: Kommunikationsverbindung
- 7: Servereinrichtung

## Patentansprüche

1. Steuerungssystem (2) für ein Kraftfahrzeug (1), umfassend
- einen zentralen Fahrzeugregler (3) als Steuer- und Regeleinheit zum Ansteuern von Fahrzeugfunktionen (4);
- mehrere Fahrerassistenzsysteme (5), welche dazu eingerichtet sind,
▪ die Fahrzeugfunktionen (4) betreffende Steuerbefehle für ihre jeweiligen Assistenzfunktionen an den Fahrzeugregler (3) zu übermitteln;
▪ einen die jeweiligen Assistenzfunktionen beschreibenden Aufgabenschlüssel an den Fahrzeugregler (3) zu übermitteln;
▪ einen den jeweiligen Assistenzfunktionen zugeordneten Sicherheitsschlüssel an den Fahrzeugregler (3) zu übermitteln;
- wobei der Fahrzeugregler (3) dazu eingerichtet ist,
▪ anhand der übermittelten Aufgabenschlüssel eine jeweilige Aufgabe der Fahrerassistenzsysteme (5) zu erkennen;
▪ eine Sicherheitsüberprüfung durchzuführen, indem der Fahrzeugregler (3) anhand der jeweils übermittelten Sicherheitsschlüssel für die jeweils erkannten Aufgaben überprüft, ob der jeweilige Sicherheitsschlüssel mindestens eine der jeweiligen Aufgabe zugeordnete Sicherstufe erfüllt;
▪ falls die Sicherheitsüberprüfung erfolgreich war, die Fahrzeugfunktionen (4) gemäß den jeweiligen von dem Fahrerassistenzsystem (5) übermittelten Steuerbefehlen zur Durchführung der jeweiligen Assistenzfunktionen anzusteuern.

2. Steuerungssystem (2) nach Anspruch 1,
**dadurch gekennzeichnet, dass**
der Fahrzeugregler (3) dazu eingerichtet ist, durch das Ansteuern der Fahrzeugfunktionen (4) das Kraftfahrzeug (1) zu lenken, zu bremsen und/oder zu beschleunigen.

3. Steuerungssystem (2) nach einem der vorhergehenden Ansprüche,
**dadurch gekennzeichnet, dass**
der Fahrzeugregler (3) dazu eingerichtet ist, vorbestimmte Aufgaben anzubieten, deren Aufgabenschlüssel im Fahrzeugregler (3) hinterlegt sind.

4. Steuerungssystem (2) nach Anspruch 3,
**dadurch gekennzeichnet, dass**
der Fahrzeugregler (3) dazu eingerichtet ist, die jeweiligen Aufgaben der Fahrerassistenzsysteme (5) durch einen Abgleich der übermittelten Aufgabenschlüssel mit den im Fahrzeugregler (3) hinterlegten Aufgabenschlüsseln zu erkennen.

5. Steuerungssystem (2) nach einem der vorhergehenden Ansprüche,
**dadurch gekennzeichnet, dass**
die Fahrzeugfunktionen (4) jeweils Steuereinheiten aufweisen, welche dazu ausgelegt sind, bei einem Starten des Kraftfahrzeugs (2) die von der jeweiligen Fahrzeugfunktion (4) durchführbaren Aufgaben an den Fahrzeugregler (3) zu übermitteln.

6. Steuerungssystem (2) nach Anspruch 5,
**dadurch gekennzeichnet, dass**
innerhalb des Steuerungssystems (2) jeglicher weiterer Datenaustausch zwischen dem Fahrzeugregler (3) und den Steuereinheiten der Fahrzeugfunktionen (4) auf Anfrage der Fahrerassistenzsysteme (5) im Rahmen der Durchführung der jeweiligen Assistenzfunktionen erfolgt.

7. Steuerungssystem (2) nach einem der vorhergehenden Ansprüche,
**dadurch gekennzeichnet, dass**
der Fahrzeugregler (3) dazu eingerichtet ist, im Rahmen der Sicherheitsüberprüfung zusätzlich zu überprüfen, ob den jeweiligen Aufgaben zugeordnete Soll-Vorgaben bezüglich einer aktuellen Fahrsituation des Kraftfahrzeugs (1) erfüllt sind und nur falls diese Überprüfung erfolgreich war, die Fahrzeugfunktonen (4) gemäß den jeweiligen von dem Fahrerassistenzsystem (5) übermittelten Steuerbefehlen zur Durchführung der jeweiligen Assistenzfunktionen anzusteuern.

8. Steuerungssystem (2) nach Anspruch 7,
**dadurch gekennzeichnet, dass**
der Fahrzeugregler (3) dazu eingerichtet ist, als die den jeweiligen Aufgaben zugeordneten Soll-Vorgaben zumindest einen Geschwindigkeitsbereich, einen Fahreranwesenheitsnachweis und/oder Vorgaben zur Fahrzeugumgebung zu überprüfen.

9. Steuerungssystem (2) nach einem der vorhergehenden Ansprüche,
**dadurch gekennzeichnet, dass**
der Fahrzeugregler (3) dazu eingerichtet ist, falls dieser für mehrere Fahrerassistenzsysteme (5) jeweils erfolgreiche Sicherheitsprüfungen durchgeführt hat, gemäß einer vorbestimmten Auswahlroutine eine Reihenfolge der Durchführung der jeweiligen Assistenzfunktionen festzulegen.

10. Steuerungssystem (2) nach einem der vorhergehenden Ansprüche,
**dadurch gekennzeichnet, dass**
in das Steuerungssystem (3) zusätzliche Fahrerassistenzsysteme (5) integrierbar sind, falls die jeweiligen Assistenzfunktionen dieser Fahrerassistenzsysteme (5) mit den dem Fahrzeugregler (3) bekannten Aufgabenschlüsseln beschreibbar sind.

11. Steuerungssystem (2) nach einem der vorhergehenden Ansprüche,
**dadurch gekennzeichnet, dass**
die Fahrerassistenzsysteme (5) dazu eingerichtet sind, die Aufgaben- und Sicherheitsschlüssel derart zu übermitteln, dass deren Datensätze gegen eine unbeabsichtigte Änderung eines einzelnen Bits durch zufällige Hardware-Fehler innerhalb der jeweiligen Datensätze abgesichert sind.

12. Steuerungssystem (2) nach einem der vorhergehenden Ansprüche,
**dadurch gekennzeichnet, dass**
die Fahrerassistenzsysteme (5) dazu eingerichtet sind, die Aufgaben- und Sicherheitsschlüssel kryptographisch verschlüsselt zu übermitteln.

13. Steuerungssystem (2) nach einem der vorhergehenden Ansprüche,
**dadurch gekennzeichnet, dass**
innerhalb des Steuerungssystems (2) jeglicher Datenaustausch zwischen dem Fahrzeugregler (3) und den Fahrerassistenzsystemen (5) selbst kryptographisch verschlüsselt ist.

14. Verfahren zum Betreiben eines Steuerungssystem (2) eines Kraftfahrzeugs (1) nach
einem der vorhergehenden Ansprüche, umfassend die Schritte: -Übermitteln der Steuerbefehle von wenigstens einem der Fahrerassistenzsysteme (5) an den Fahrzeugregler (3),
- Übermitteln des Aufgabenschlüssels von wenigstens einem der Fahrerassistenzsysteme (5) an den Fahrzeugregler (3),
- Übermitteln des Sicherheitsschlüssels von dem wenigstens einen der Fahrerassistenzsysteme (5) an den Fahrzeugregler (3), - Erkennen der jeweiligen Aufgabe der Fahrerassistenzsysteme (5) anhand der übermittelten Aufgabenschlüssel durch den Fahrzeugregler (3),
- Durchführen der Sicherheitsprüfung für den übermittelten Aufgaben- und Sicherheitsschlüssel durch den Fahrzeugregler (3), ob der jeweilige Sicherheitsschlüssel mindestens eine der jeweiligen Aufgabe zugeordnete Sicherstufe erfüllt;
- Ansteuern der wenigstens einen entsprechenden Fahrzeugfunktion (4) durch den Fahrzeugregler (3) gemäß der von dem wenigstens einen der Fahrerassistenzsysteme (5) übermittelten Steuerbefehle zur Durchführung der entsprechenden Assistenzfunktion, falls die Sicherheitsprüfung erfolgreich war.

15. Kraftfahrzeug (1) mit einem Steuerungssystem (2) nach einem der Ansprüche 1-13.

## Claims

1. Control system (2) for a motor vehicle (1), comprising
- a central vehicle regulator (3) as a control and regulating unit for actuating vehicle functions (4);
- multiple driver assistance systems (5), which are configured to
▪ transmit control commands relating to the vehicle functions (4) for their respective assistance functions to the vehicle regulator (3);
▪ transmit a task key describing the respective assistance functions to the vehicle regulator (3);
▪ transmit a safety key assigned to the respective assistance functions to the vehicle regulator (3);
- wherein the vehicle regulator (3) is configured to
▪ recognize a respective task of the driver assistance systems (5) on the basis of the transmitted task key;
▪ carry out a safety check in that the vehicle regulator (3) checks on the basis of the respective transmitted safety key for the respective recognize tasks whether the respective safety key meets at least one safety level assigned to the respective task;
▪ if the safety check was successful, to actuate the vehicle functions (4) according to the respective control commands transmitted from the driver assistance system (5) to carry out the respective assistance functions.

2. Control system (2) according to Claim 1,
**characterized in that**
the vehicle regulator (3) is configured to steer, brake, and/or accelerate the motor vehicle (1) by the actuation of the vehicle functions (4).

3. Control system (2) according to any one of the preceding claims,
**characterized in that**
the vehicle regulator (3) is configured to offer predetermined tasks, the task keys of which are stored in the vehicle regulator (3).

4. Control system (2) according to Claim 3,
**characterized in that**
the vehicle regulator (3) is configured to recognize the respective tasks of the driver assistance systems (5) by a comparison of the transmitted task keys to the task keys stored in the vehicle regulator (3).

5. Control system (2) according to any one of the preceding claims,
**characterized in that**
the vehicle functions (4) each have control units which are designed to transmit the tasks that can be carried out by the respective vehicle function (4) to the vehicle regulator (3) upon starting of the motor vehicle (2).

6. Control system (2) according to Claim 5,
**characterized in that**
within the control system (2), any further data exchange between the vehicle regulator (3) and the control units of the vehicle functions (4) takes place upon request of the driver assistance systems (5) in the scope of carrying out the respective assistance functions.

7. Control system (2) according to any one of the preceding claims,
**characterized in that**
the vehicle regulator (3) is configured to additionally check in the scope of the safety check whether target specifications assigned to the respective tasks with respect to a current driving situation of the motor vehicle (1) are met and to actuate the vehicle functions (4) according to the respective control commands transmitted from the driver assistance system (5) to carry out the respective assistance functions only if this check was successful.

8. Control system (2) according to Claim 7,
**characterized in that**
the vehicle regulator (3) is configured to check at least one speed range, a driver presents verification, and/or specifications on the vehicle surroundings as the target specifications assigned to the respective tasks.

9. Control system (2) according to any one of the preceding claims,
**characterized in that**
the vehicle regulator (3) is configured, if it has carried out successful safety checks in each case for multiple driver assistance systems (5), to define the sequence of the performance of the respective assistance functions according to a predetermined selection routine.

10. Control system (2) according to any one of the preceding claims,
**characterized in that**
additional driver assistance systems (5) are integratable into the control system (3), if the respective assistance functions of these driver assistance systems (5) are describable using task keys known to the vehicle regulator (3).

11. Control system (2) according to any one of the preceding claims,
**characterized in that**
the driver assistance systems (5) are configured to transmit the task and safety keys such that the data sets thereof are secured against an inadvertent change of a single bit due to random hardware errors within the respective data sets.

12. Control system (2) according to any one of the preceding claims,
**characterized in that**
the driver assistance systems (5) are configured to transmit the task and safety keys cryptographically encrypted.

13. Control system (2) according to any one of the preceding claims,
**characterized in that**
within the control system (2), any data exchange between the vehicle regulator (3) and the driver assistance systems (5) themselves is cryptographically encrypted.

14. Method for operating a control system (2) of a motor vehicle (1) according to any one of the preceding claims, comprising the following steps:
- transmitting the control commands from at least one of the vehicle assistance systems (5) to the vehicle regulator (3),
- transmitting the task key from at least one of the driver assistance systems (5) to the vehicle regulator (3),
- transmitting the safety key from the at least one of the driver assistance systems (5) to the vehicle regulator (3),
- recognizing the respective task of the driver assistance systems (5) on the basis of the transmitted task keys by the vehicle regulator (3),
- carrying out the safety check as to whether the respective safety key at least meets a safety level assigned to the respective task for the transmitted task and safety keys by way of the vehicle regulator (3),
- actuating the at least one vehicle function (4) by way of the vehicle regulator (3) according to the control commands transmitted from the at least one of the driver assistance systems (5) to carry out the corresponding assistance function if the safety check was successful.

15. Motor vehicle (1) having a control system (2) according to any one of Claims 1-13.

## Revendications

1. Système de commande (2) pour un véhicule automobile (1), comprenant
- un contrôleur de véhicule central (3) en tant qu'unité de commande et de régulation pour piloter des fonctions de véhicule (4) ;
- plusieurs systèmes d'assistance au conducteur (5) qui sont conçus pour
• transmettre au contrôleur de véhicule (3) les instructions de commande concernant des fonctions de véhicule (4) pour leurs fonctions d'assistance respectives ;
• transmettre au contrôleur de véhicule (3) une clé de tâche décrivant les fonctions d'assistance respectives ;
• transmettre au contrôleur de véhicule (3) une clé de sécurité associée aux fonctions d'assistance respectives ;
- dans lequel le contrôleur de véhicule (3) est conçu pour
• identifier une tâche respective des systèmes d'assistance au conducteur (5) à l'aide des clés de tâche transmises ;
• effectuer un contrôle de sécurité en ce que le contrôleur de véhicule (3) contrôle à l'aide des clés de sécurité respectivement transmises pour les tâches respectivement identifiées si la clé de sécurité respective satisfait au moins un niveau de sécurité associé à la tâche respective ;
• si le contrôle de sécurité est réussi, piloter les fonctions de véhicule (4) selon les instructions de commande respectives transmises par le système d'assistance au conducteur (5) pour effectuer les fonctions d'assistance respectives.

2. Système de commande (2) selon la revendication 1, **caractérisé en ce que** le contrôleur de véhicule (3) est conçu pour diriger, freiner et/ou accélérer le véhicule automobile (1) par le pilotage des fonctions de véhicule (4).

3. Système de commande (2) selon l'une quelconque des revendications précédentes, **caractérisé en ce que** le contrôleur de véhicule (3) est conçu pour proposer des tâches prédéterminées dont la clé de tâche est mémorisée dans le contrôleur de véhicule (3).

4. Système de commande (2) selon la revendication 3, **caractérisé en ce que** le contrôleur de véhicule (3) est conçu pour identifier les tâches respectives des systèmes d'assistance au conducteur (5) par une comparaison des clés de tâche transmises avec les clés de tâche mémorisées dans le contrôleur de véhicule (3).

5. Système de commande (2) selon l'une quelconque des revendications précédentes, **caractérisé en ce que** les fonctions de véhicule (4) présentent respectivement des unités de commande qui sont conçues, au démarrage du véhicule automobile (2), pour transmettre au contrôleur de véhicule (3) les tâches pouvant être effectuées par la fonction de véhicule (4) respective.

6. Système de commande (2) selon la revendication 5, **caractérisé en ce qu'**à l'intérieur du système de commande (2), tout échange de données supplémentaire entre le contrôleur de véhicule (3) et les unités de commande des fonctions de véhicule (4) a lieu à la demande des systèmes d'assistance au conducteur (5) dans le cadre de l'exécution des fonctions d'assistance respectives.

7. Système de commande (2) selon l'une quelconque des revendications précédentes, **caractérisé en ce que** le contrôleur de véhicule (3) est conçu dans le cadre du contrôle de sécurité pour contrôler en plus si des spécifications de consigne associées aux tâches respectives concernant une situation de conduite actuelle du véhicule automobile (1) sont satisfaites, et uniquement si ce contrôle est réussi, pour piloter les fonctions de véhicule (4) selon les instructions de commande respectives, transmises par le système d'assistance au conducteur (5), pour effectuer les fonctions d'assistance respectives.

8. Système de commande (2) selon la revendication 7, **caractérisé en ce que** le contrôleur de véhicule (3) est conçu pour contrôler en tant que spécifications de consigne associées aux tâches respectives au moins une plage de vitesse, une preuve de la présence du conducteur et/ou des spécifications concernant l'environnement du véhicule.

9. Système de commande (2) selon l'une quelconque des revendications précédentes, **caractérisé en ce que** le contrôleur de véhicule (3), s'il a effectué des contrôles de sécurité respectivement réussis pour plusieurs systèmes d'assistance au conducteur (5), est conçu pour définir selon une routine de sélection prédéterminée une séquence de l'exécution des fonctions d'assistance respectives.

10. Système de commande (2) selon l'une quelconque des revendications précédentes, **caractérisé en ce que** des systèmes d'assistance au conducteur (5) supplémentaires peuvent être intégrés dans le système de commande (3) si les fonctions d'assistance respectives de ces systèmes d'assistance au conducteur (5) peuvent être décrites par des clés de tâche connues du contrôleur de véhicule (3).

11. Système de commande (2) selon l'une quelconque des revendications précédentes, **caractérisé en ce que** les systèmes d'assistance au conducteur (5) sont conçus pour transmettre les clés de tâche et de sécurité de telle sorte que leurs enregistrements sont protégés contre toute modification involontaire d'un seul bit par un défaut matériel aléatoire dans les enregistrements respectifs.

12. Système de commande (2) selon l'une quelconque des revendications précédentes, **caractérisé en ce que** les systèmes d'assistance au conducteur (5) sont conçus pour transmettre les clés de tâche et de sécurité de manière chiffrée par cryptographie.

13. Système de commande (2) selon l'une quelconque des revendications précédentes, **caractérisé en ce que** dans le système de commande (2), tout échange de données entre le contrôleur de véhicule (3) et les systèmes d'assistance au conducteur (5) est en lui-même chiffré par cryptographie.

14. Procédé permettant de faire fonctionner un système de commande (2) d'un véhicule automobile (1) selon l'une quelconque des revendications précédentes, comprenant les étapes suivantes consistant à :
- transmettre au contrôleur de véhicule (3) les instructions de commande d'au moins l'un des systèmes d'assistance au conducteur (5),
- transmettre au contrôleur de véhicule (3) la clé de tâche d'au moins l'un des systèmes d'assistance au conducteur (5),
- transmettre au contrôleur de véhicule (3) la clé de sécurité dudit au moins un des systèmes d'assistance au conducteur (5),
- identifier par le contrôleur de véhicule (3) la tâche respective des systèmes d'assistance au conducteur (5) à l'aide de la clé de tâche transmise,
- effectuer par le contrôleur de véhicule (3) le contrôle de sécurité pour les clés de tâche et de sécurité transmises si la clé de sécurité respective satisfait au moins un niveau de sécurité associé à la tâche respective ;
- piloter par le contrôleur de véhicule (3) ladite au moins une fonction de véhicule (4) correspondante selon les instructions de commande transmises par ledit au moins un des systèmes d'assistance au conducteur (5) pour effectuer la fonction d'assistance correspondante si le contrôle de sécurité est réussi.

15. Véhicule automobile (1) comprenant un système de commande (2) selon l'une quelconque des revendications 1 à 13.
